# EUROPÄISCHE PATENTSCHRIFT

(11) **EP 0 412 302 B1**
(45) Veröffentlichungstag und Bekanntmachung des Hinweises auf die Patenterteilung: **28.09.1994**
(21) Anmeldenummer: 90113156.5
(22) Anmeldetag: 10.07.1990
(51) Int. Cl.: H02B 1/044

(54) **Vorrichtung zum Befestigen eines versenkt in eine Gerätetafel eingebauten Gerätes**
Device for flush mounting built-in apparatus in a switchboard
Dispositif de montage d'appareil encastré dans un tableau d'appareil

(30) Priorität: 07.08.1989 CH 2908/89
(43) Veröffentlichungstag der Anmeldung: 13.02.1991
(73) Patentinhaber: ASEA BROWN BOVERI AG, 5400 Baden (CH)
(72) Erfinder: Boll, Klaus, CH-5452 Oberrohrdorf (CH); Fiore, Carmine, CH-5314 Kleindöttingen (CH); Henle, Burkhard, CH-5242 Birr (CH)

(56) Entgegenhaltungen:
- DE-C- 890 270
- FR-A- 1 351 987
- GB-A- 1 112 295

## Beschreibung

### Technisches Gebiet

Bei der Erfindung wird ausgegangen von einer Vorrichtung zum Befestigen eines versenkt in eine Gerätetafel eingebauten Gerätes nach dem einleitenden Teil von Patentanspruch 1.

### Stand der Technik

Eine Befestigungsvorrichtung mit allen Merkmalen des einleitenden Teils von Patentanspruch 1 ist in GB-A-1,112,295 angegeben. Diese Vorrichtung weist mehrere jeweils in Einbaurichtung eines festzusetzenden Gerätes erstreckte Nuten auf, in denen jeweils ein in Einbaurichtung verschiebliches Klemmelement angeordnet ist. Das Klemmelement trägt eine in Einbaurichtung ausgerichtete Klemmschraube. Beim Festsetzen des durch eine Öffnung einer Gerätetafel eingeführten Gerätes wird zunächst das Klemmelement in die Nut eingelegt, wobei vordere Endabschnitte des Klemmelementes zwischen dem Boden der Nut und Kanten der Gerätetafelöffnung angeordnet werden. Danach wird das Klemmelement durch Verdrehen der mit ihrem freien Ende auf der Rückseite der Gerätetafel abgestützten Klemmschraube gegen eine von der Frontseite der Gerätetafel abgewandte Rückwand der Nut gepresst und dabei das Gerät festgesetzt. Die Montage des Gerätes ist wegen des Festziehens der Klemmschraube relativ langwierig. Beim Einlegen in die Nut muss das Klemmelement zudem vom Gerät weggekippt werden, um seine vorderen Endabschnitte zwischen den Nutboden und die Kanten der Gerätetafelöffnung einschieben zu können. Beim Einbau mehrerer benachbart angeordneter Geräte kann dies wegen Platzmangels erhebliche Schwierigkeiten bereiten oder gegebenenfalls garnicht ausführbar sein.

### Darstellung der Erfindung

Die Erfindung, wie sie im Patentanspruch 1 definiert ist, löst die Aufgabe, eine Vorrichtung zum Befestigen eines versenkt in eine Gerätetafel eingebauten Gerätes anzugeben, welche in platzsparender Weise eine rasche und dem Sichtbereich entzogene Montage des Gerätes ermöglicht.

Die Befestigungsvorrichtung nach der Erfindung zeichnet sich unter anderem durch folgende Vorteile aus:
1. Rüttelsicherheit.
2. Leichte Handhabbarkeit.
3. Platzersparnis.
4. Wirtschaftlichkeit.
5. Anwendbarkeit auch für verhältnismässig schwere Geräte.
6. Einsetzbarkeit bei Gerätetafeln unterschiedlicher Dicke.
7. Rasche Montagemöglichkeit.
8. Einfache Befestigungsmöglichkeit für Geräte mit in Einbaurichtung gezogenen Profilen.

### Kurze Beschreibung der Zeichnung

Die Erfindung wird nachfolgend anhand von in der Zeichnung dargestellten Ausführungsbeispielen näher erläutert. Hierbei zeigt:
- Fig.1: eine Draufsicht auf ein als Hebel ausgebildetes Klemmelement einer ersten Ausführungsform der Befestigungsvorrichtung nach der Erfindung,
- Fig.2: eine nach rechts gerichtete Seitenansicht des Hebels nach Fig. 1,
- Fig.3: eine Vorderansicht des Hebels nach Fig. 1,
- Fig.4: eine Draufsicht auf ein als Spreizfeder ausgebildetes weiteres Klemmelement der ersten Ausführungsform der erfindungsgemässen Befestigungsvorrichtung in zwei verschiedenen Bewegungsphasen während des Festsetzens eines zum Teil im Schnitt dargestellten Gehäuses eines Gerätes in einer Gerätetafel,
- Fig.5: eine nach rechts gerichtete Seitenansicht der Spreizfeder nach Fig. 4,
- Fig.6: eine Draufsicht auf die den Hebel nach Fig. 1 und die Spreizfeder nach Fig. 4 enthaltende erste Ausführungsform der erfindungsgemässen Befestigungsvorrichtung in verschiedenen Bewegungsphasen während des Festsetzens eines zum Teil im Schnitt dargestellten Gehäuses eines Gerätes in einer Gerätetafel,
- Fig.7: eine nach rechts gerichtete Seitenansicht der Befestigungsvorrichtung nach Fig. 6,
- Fig.8 u.9: Vorderansichten der ersten Ausführungsform der erfindungsgemässen Befestigungsvorrichtung nach Fig. 6 in zwei verschiedenen Bewegungsphasen, wobei das Gehäuse des festzusetzenden Gerätes längs der Linien VIII - VIII bzw. XI - XI geschnitten dargestellt ist,
- Fig.10: eine Seitenansicht einer zweiten Ausführungsform der erfindungsgemässen Befestigungsvorrichtung,
- Fig.11: eine Draufsicht auf ein ebenfalls als Spreizfeder ausgebildetes Klemmelement der Befestigungsvorrichtung gemäss Fig. 10, und
- Fig.12: eine Aufsicht in Pfeilrichtung auf einen längs XII - XII geführten Schnitt durch die Spreizfeder gemäss Fig.11.

### Weg zur Ausführung der Erfindung

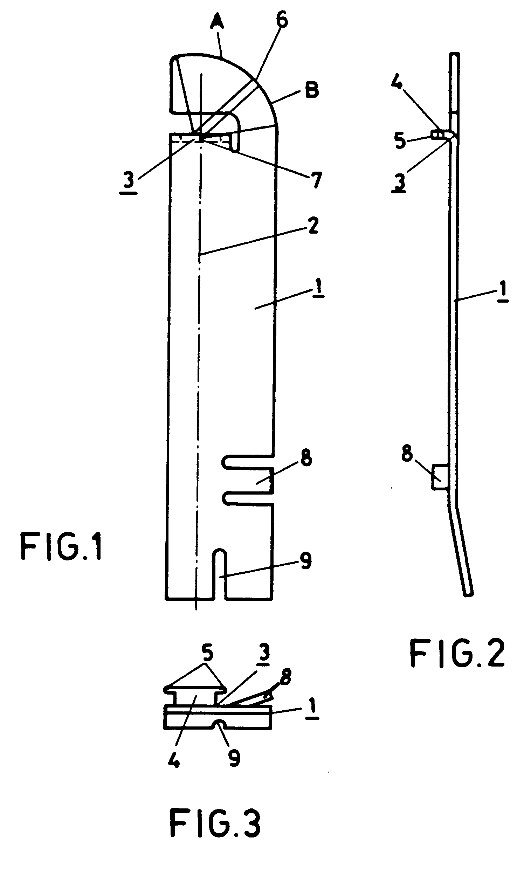

In den Figuren 1 - 3 ist ein in einer ersten Ausführungsform der erfindungsgemässen Befestigungsvorrichtung als Klemmelement vorgesehener Hebel 1 dargestellt. Dieser Hebel ist vorzugsweise aus Blech gestanzt und kann daher vorteilhaft flach ausgebildet sein. In Fig. 1 ist der Hebel 1 parallel zur Einbaurichtung 2 eines in den Figuren 1 - 3 nicht dargestellten Gerätes in einer ebenfalls nicht dargestellten Gerätetafel angeordnet. Der Hebel 1 besitzt im Bereich seines oberen Endes eine im wesentlichen T-Form aufweisende Ausbiegung 3, welche vorteilhafterweise überwiegend senkrecht zum übrigen Körper des Hebels 1 verläuft. Im Hals 4 des T besitzt die Ausbiegung 3 überwiegend rechteckigen Querschnitt. Die Arme des T sind mit dem Bezugszeichen 5 versehen. Am oberen Ende weist der Hebel 1 eine Aussenkante 6 auf mit einer - bezogen auf eine im Zentrum des Halses 4 des T gelegenen Drehachse 7 - im Gegenuhrzeigersinn sich im wesentlichen spiralförmig erweiternden Kontur. Die Aussenkante 6 ist im wesentlichen gebildet von zwei kreisförmigen Abschnitten A und B, deren Kreismittelpunkte gegeneinander versetzt angeordnet sind. Der dem Kreisabschnitt B zugeordnete Kreismittelpunkt kommt auf der im Zentrum des Halses 4 des T geführten Drehachse 7 zu liegen. An seinem unteren Ende enthält der Hebel 1 eine als Widerhaken 8 ausgebildete weitere Ausbiegung sowie einen überwiegend in Einbaurichtung 2 erstreckten Schlitz 9.

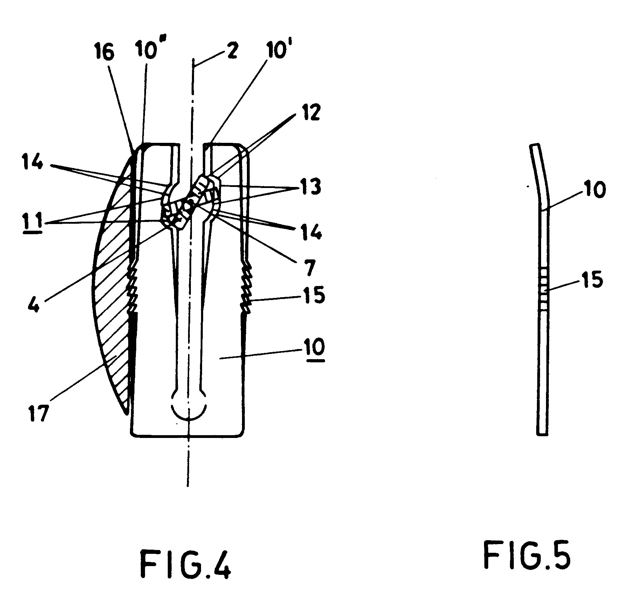

In den Fig. 4 und 5 ist eine in der erfindungsgemässen Vorrichtung als weiteres Klemmelement vorgesehene Spreizfeder 10 dargestellt. Diese Spreizfeder 10 ist U-förmig ausgebildet. Im Bereich ihres offenen Endes, auf den einander zugewandten inneren Flächen der beiden Schenkel des U trägt sie eine Kulisse 11. Diese Kulisse weist drei zur Drehachse 7 zentrisch symmetrisch gelegene Winkelabschnitte 12, 13 und 14 auf. Die Winkelabschnitte 12 sind derart ausgebildet, dass nach durch Bombierung der Spreizfeder 10 (Fig. 5) erleichtertes Einsetzen der Ausbiegung 3 des Hebels 1 in das U die Spreizfeder 10 entspannt in der Position 10′ verbleibt. Der Hebel 4 der Ausbiegung 3 übt hierbei auf die Schenkel des U keine Kraft aus. Hingegen sind die an die Winkelabschnitte 12 anschliessenden Winkelabschnitte 13 derart beschaffen, dass im Verlauf einer im Uhrzeigersinn erfolgenden Drehung des Hebels 1 der Hals 4 die Schenkel des U auseinanderdrückt und deren mit Zähnen 15 versehene Aussenflächen in eine Position 10˝ führt. In den an die Winkelabschnitte 13 anschliessenden Winkelabschnitten 14 schliesslich kann der Hebel weiter im Uhrzeigersinn gedreht werden, ohne dass sich das U weiter aufspreizt. Hierbei verbleibt die Spreizfeder 10 in der Position 10˝.
Wie aus Fig. 4 ersichtlich, ist die Spreizfeder 10 verschieblich angeordnet in einer hinterschnitten ausgebildeten Nut 16 eines zum Teil geschnitten dargestellten Gehäuses 17, welches zu einem in einer nicht dargestellten Gerätetafel festzusetzenden Gerät gehört. Hierbei ist die Nut 16 in Einbaurichtung 2 des Gerätes erstreckt und bleibt die Spreizfeder 10 solange verschieblich, wie sie die Position 10′ beibehält. Sobald sie sich in der Position 10˝befindet verklemmt sie sich - von den Zähnen 15 unterstützt - mit ihren Aussenflächen in der Nut 16.

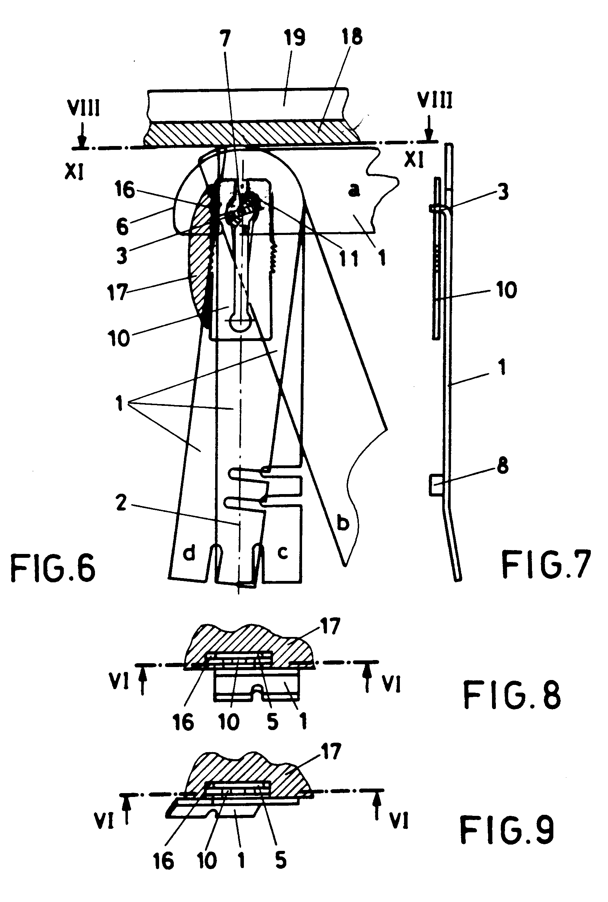

Die Wirkungsweise der erfindungsgemässen Befestigungsvorrichtung wird nachfolgend anhand der Figuren 6 - 9 dargestellt. In diesen und den Figuren 1 - 5 beziehen sich gleiche Bezugszeichen auch auf gleiche Teile.

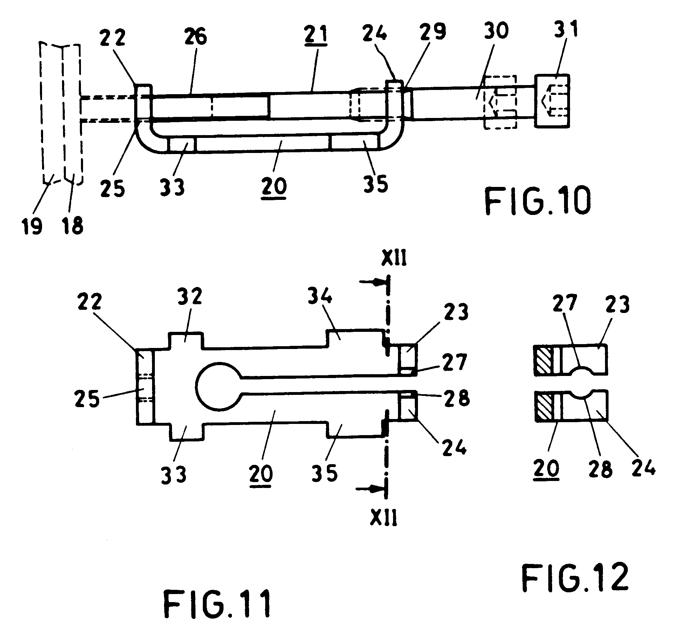

Beim Einbau eines Gerätes mit einem Gehäuse 17 wird das Gerät zunächst durch eine Öffnung einer in Fig. 6 geschnitten dargestellten Gerätetafel 18 solange in Einbaurichtung 2 geführt bis ein Frontflansch 19 des Gehäuses 17 auf der Aussenfläche der Gerätetafel 18 aufsitzt. Das Festsetzen des Gerätes wird nun mit der erfindungsgemässen Befestigungsvorrichtung wie folgt durchgeführt:
In einer mit a bezeichneten Position wird der Hebel 1 mit seiner Ausbiegung 3 im Bereich der Kulisse 11 in die Spreizfeder 10 eingeführt. Die Längsachse des Hebels 1 steht nun im wesentlichen senkrecht auf der Einbaurichtung 2.
Durch eine quer zur Einbaurichtung erfolgende Drehung im Uhrzeigersinn um die Drehachse 7 wird der Hebel 1 sukzessive in die in Fig. 6 angegebenen Positionen b, c und d geführt. Aus den in den Figuren 8 und 9 dargetellten Positionen c und d ist ersichtlich, wie hierbei die Arme 5 des T die Spreizfeder 10 hintergreifen und dadurch einen sicheren Sitz des Hebels 1 in der Spreizfeder 10 gewährleisten. Das Hintergreifen während des Drehens des Hebels 1 von der Position a in die Position b wird durch die Fig. 5 dargestellte Bombierung der Spreizfeder 10 erleichtert.

Beim Drehen von der Position a in die Position b wird der Hals 4 des T zunächst auf dem durch die Winkelabschnitt 12 bestimmten Teil der Kulisse 11 geführt. Die Spreizfeder 10 ist daher zunächst noch nicht gespannt und kann in der in Einbaurichtung erstreckten Nut 16 solange verschoben werden, bis die Aussenkante 6 des Hebels 1 an der vom Frontflansch 19 abgewandten Seite der Gerätetafel 18 anschlägt. Beim Weiterdrehen des Hebels 1 wird der Hals 4 des T auf den Winkelabschnitten 13 der Kulissen 11 geführt. Hierbei setzt sich die Spreizfeder 10 mit ihren Zähnen 15 in der Nut 16 fest und fixiert damit den durch das Zentrum des T laufenden Drehpunkt 7 des Hebels 1, wie dies in Position b angegeben ist. Die Aussenkante 6 übt hierbei noch keine Anpresskraft aus, da sie bis zum Erreichen der Position b mit ihrem Kreisabschnitt B auf der Innenseite der Gerätetafel 18 aufliegt.

Bei der weiteren Drehung des Hebels 1 in der nun festgesetzten Spreizfeder 10 von der Position b über die Position c in die Position d wird der Hals 4 des T auf den Winkelabschnitten 14 der Kulisse 11 geführt. Hierbei bleibt die Spreizfeder 10 unverändert fest verklemmt in der Nut 16, jedoch erzeugt die Aussenkante 6, deren nun im Kreisabschnitt A befindlicher Auflagepunkt auf der Gehäusetafel 18 sich vom Drehpunkt kontinuierlich entfernt, eine den Frontflansch 19 und damit das Gerät auf der Gerätetafel 18 festsetzende Anpresskraft.

Anstelle einer Spreizfeder 10 kann als Klemmelement auch irgendein in der Nut 16 drehbarer, vorteilhafterweise trapez- oder ellipsenförmig ausgebildeter Keil Verwendung finden.

Um das Verdrehen des Hebels 1 zu erleichtern, kann ein Verlängerungsteil, etwa ein Schraubendreher, in den Schlitz 9 eingesteckt werden.

Nach der Festsetzung des Gerätes in der Gerätetafel 18 wird der Hebel 1 mit seinem Widerhaken 8 in die Nut 16 oder irgendein anderes gekantetes Teil des Gehäuses 17 eingehängt. Der Hebel 1 ist dann gegen unerwünschte Verdrehung gesichert.

Bei der in den Figuren 10, 11 und 12 dargestellten zweiten Ausführungsform der erfindungsgemässen Befestigungsvorrichtung bezeichnet 20 eine entsprechend der ersten Ausführungsform in der Nut 16 des festzusetzenden und aus Gründen der Übersichtlichkeit nicht dargestellten Gerätes geführte Spreizfeder. Diese Spreizfeder 20 ist ebenfalls U-förmig ausgebildet und lagert eine in Richtung der Schenkel des U geführte Schraube 21. Hierzu weist die Spreizfeder 20 im Bogen des U mindestens einen im wesentlichen senkrecht zur Lageebene des U erstreckten Ansatz 22 auf sowie an den offenen Enden der Schenkel des U jeweils einen ebenfalls im wesentlichen senkrecht zur Lageebene des U erstreckten Ansatz 23, 24. Durch den Ansatz 22 ist ein Innengewinde 25 geführt, welches der Aufnahme eines Aussengewindes 26 der Schraube 21 dient. An den Ansätzen 23, 24 befindet sich jeweils eine kreisbogenförmige Ausnehmung 27, 28, durch die hindurch die Schraube 21 geführt ist. Die Schraube 21 weist in koaxialer Anordnung das durch den Ansatz 22 führbare Aussengewinde 26, einen sich zum Aussengewinde 26 hin verjüngenden Konus 29 und einen an den Konus 29 an dessen aufgeweiteter Seite sich anschliessenden, zylinderförmig ausgebildeten Abschnitt 30 auf, welcher in den Kopf 31 der Schraube 21 ausläuft. An der Spreizfeder 20 sind im Bereich des Bogens des U ferner zwei zueinander gegenläufig in der Lageebene des U erstreckte Ansätze 32, 33 vorgesehen. An den freien Enden der Schenkel des U ist zudem jeweils mindestens ein ebenfalls in der Lageebene des U erstreckter Ansatz 34, 35 angeordnet.

Beim Einbau des Gerätes wird das Gerät zunächst wieder durch die Öffnung der Gerätetafel solange in Einbaurichtung geführt bis der Frontflansch seines Gehäuses auf der Aussenfläche der Gerätetafel aufsitzt. Das Festsetzen des Gerätes wird nun mit der Befestigungsvorrichtung gemäss der Figuren 10 - 12 wie folgt durchgeführt: Die in der nicht dargestellten Nut 16 des Gerätegehäuses mittels der Ansätze 32 - 35 geführte Spreizfeder 20 wird entgegen der Einbaurichtung des Gerätes gegen die Gerätetafel geschoben. Mittels eines von der Rückseite des Geräteschranks eingeführten Schraubendrehers wird die zunächst in den Ausnehmungen 27, 28 der Ansätze nahezu klemmfrei geführte Schraube 21 in die Spreizfeder 20 hineingedreht. Hierbei wird entsprechend der Darstellung in Fig. 10 der Konus 29 gegen die kreisbogenförmigen Begrenzungskanten der Ausnehmungen 27, 28 geführt und werden nun bei weiterer Verdrehung der Schraube 21 durch die Keilwirkung des Konus 29 die Schenkel der U-förmig ausgebildeten Spreizfeder 20 - entsprechend der Ausführungsform gemäss der Figuren 1 - 9 - nach aussen gegen die Wände der Nut 16 gepresst.

Der Konus 29 ist so bemessen, dass die Spreizfeder 29 mit ihren beiden Ansätzen 34 und 35 ausreichend fest in der Nut 16 verklemmt ist, wenn der an den Konus 29 anschliessende zylinderförmige Abschnitt 30 in die Ausnehmungen 27 und 28 geführt wird. Durch weiteres Verdrehen der Schraube 21 wird dann lediglich bewirkt, dass bei gleichbleibender Klemmkraft der von der Spreizfeder 20 und dem Gerätegehäuse gebildeten Klemmverbindung die Schraube 21 mit ihrem vom Kopf 31 abgewandten Ende durch das Innengewinde 25 hindurch geführt wird und zwar so lange, bis dieses Ende durch Abstützung auf der Innenseite der Gerätetafel 18 den Frontflansch 19 des Gerätes festgesetzt hat (gestrichelt eingezeichnete Position in Fig. 10)

Eine solche Befestigungsvorrichtung ist besonders einfach aufgebaut und zeichnet sich zudem durch besonders grosse Rüttelsicherheit aus.

## Patentansprüche

1. Vorrichtung zum Befestigen eines versenkt in eine Gerätetafel (18) eingebauten Gerätes, bei dem das Gerät beim Einbau frontseitig durch eine Öffnung der Gerätetafel (18) geführt und mit einem Frontflansch (19) seines Gehäuses (17) auf der Gerätetafel (18) festgesetzt ist, wobei das Gehäuse (17) mindestens eine im wesentlichen in Einbaurichtung (2) des Gerätes erstreckte Nut (16) aufweist, und wobei mindestens zwei Klemmelemente (10, 1; 20, 21) vorgesehen sind, von denen ein erstes (10; 20) in die Nut (16) eingesetzt ist und ein zweites (1;21) im ersten Klemmelement (10; 20) derart drehbar gelagert ist, dass sich bei dessen Verdrehen das erste Klemmelement (10; 20) in der Nut (16) verklemmt und den Frontflansch (19) an der Gerätetafel (18) festsetzt, dadurch gekennzeichnet, dass das erste Klemmelement (10, 20) in der Nut (16) stufenlos verschiebbar geführt ist, und dass zum Befestigen des Gerätes zunächst das erste Klemmelement (10; 20) in eine gewünschte Position in der Nut (16) verschiebbar ist, danach durch ein erstes Verdrehen des zweiten Klemmelementes (1; 21) in der Nut (16) verklemmbar ist und schließlich das Festsetzen des Frontflansches (19) an der Gerätetafel durch weiteres Verdrehen des zweiten Klemmelement (1; 21) erfolgt.

2. Vorrichtung nach Anspruch 1, dadurch gekennzeichnet, dass als erstes Klemmelement eine U-förmig ausgebildete Spreizfeder (10, 20) vorgesehen ist mit sich beim Verdrehen des zweiten Klemmelementes aufspreizenden Schenkeln.

3. Vorrichtung nach Anspruch 2, dadurch gekennzeichnet, dass die Spreizfeder (10) eine Kulisse (11) trägt, in welche das als Hebel (1) ausgebildete zweite Klemmelement mit einer als Drehachse (7) des Hebels (1) wirkende Ausbiegung (3) einsetzbar ist.

4. Vorrichtung nach Ansprüche 3, dadurch gekennzeichnet, dass der Hebel (1) eine auf der vom Frontflansch (19) abgewandten Seite der Gerätetafel (18) abstützbare Aussenkante (6) aufweist mit einer sich im wesentlichen spiralförmig erweiternden Kontur.

5. Vorrichtung nach Anspruch 4, dadurch gekennzeichnet, dass die sich im wesentlichen spiralförmig erweiternde Kontur der Aussenkante (6) des Hebels (1) im wessentlichen gebildet ist von zwei Kreisabschnitten (A, B), deren Kreismittelpunkte gegeneinander versetzt angeordnet sind, und von denen einer der Kreismittelpunkte auf dem die Drehachse (7) des Hebels (1) bildenden Zentrum der Ausbiegung (3) angeordnet ist.

6. Vorrichtung nach einem der Ansprüche 3 bis 5, dadurch gekennzeichnet, dass die Kulisse (11) mindestens drei zur Drehachse (7) des Hebels (1) zentrisch symmetrisch angeordnete Winkelabschnitte (12, 13, 14) enthält, welche derart ausgebildet sind, dass das erste Klemmelement nach Einsetzen des Hebels (1) in erste der drei Winkelabschnitte (12) der Kulisse (11) keine Klemmkraft ausübt und bei Verdrehen des Hebels (1) in zweite der drei Winkelabschnitte (13) in der Nut (16) festgeklemmt wird und in dritte der drei Winkelabschnitte (14) unter Beibehalt der Klemmkraft die Drehachse (7) des Hebels (1) fixiert.

7. Vorrichtung nach einem der Ansprüche 3 bis 6, dadurch gekennzeichnet, dass die Spreizfeder (10) auf den einander zugewandten Flächen der Schenkel des U im Bereich ihres offenen Endes die Kulisse (11) trägt, und dass die Ausbiegung (3) des Hebels (1) im wesentlichen T-Form aufweist, wobei der Hals (4) des T in der Kulisse (11) geführt ist, und die Arme (5) des T die beiden Schenkel der Spreizfeder (10) hintergreifen.

8. Vorrichtung nach Anspruch 7, dadurch gekennzeichnet, dass die Spreizfeder (10) bombiert ausgebildet ist.

9. Vorrichtung nach einem der Ansprüche 3 - 8, dadurch gekennzeichnet, dass der Hebel einen am Gehäuse (17) des Gerätes arretierbaren Widerhaken (8) aufweist.

10. Vorrichtung nach Anspruch 2, dadurch gekennzeichnet, dass die Spreizfeder (20) ein Innengewinde (25) trägt, in welchem ein Aussengewinde (26) einer als zweites Klemmelement vorgesehenen Schraube (21) drehbar geführt ist.

11. Vorrichtung nach Anspruch 10, dadurch gekennzeichnet, dass die Schraube (21) in koaxialer Anordnung das Aussengewinde (26), einen sich zum Aussengewinde (26) hin verjüngenden Konus (29), und einen an den Konus (29) an dessen aufgeweiteter Seite sich anschliessenden, zylinderförmig ausgebildeten Abschnitt (30) aufweist, und dass die Schraube an dem von zylinderförmig ausgebildeten Abschnitt (31) abgewandten Ende durch das Innengewinde (25) der Spreizfeder (20) hindurch führbar ist.

12. Vorrichtung nach einem der Ansprüche 10 oder 11, dadurch gekennzeichnet, dass die Spreizfeder (20) im Bogen des U mindestens einen im wesentlichen senkrecht zur Lageebene des U erstreckten und der Aufnahme des Innengewindes (25) dienenden ersten Ansatz (22) sowie mindestens zwei zueinander gegenläufig in der Lageebene des U erstreckte und der Führung der Spreizfeder (20) in der Nut (16) dienende zweite Ansätze (32, 33) aufweist und an den freien Enden der Schenkel des U jeweils mindestens einen im wesentlichen senkrecht zur Lageebene des U erstreckten und der Abstützung des Konus (29) dienenden dritten Absatz (23, 24) sowie mindestens zwei in der Lageebene des U erstreckte, der Führung und der Festsetzung der Spreizfeder (20) in der Nut (16) dienende vierte Absätze (34, 35).

## Claims

1. Device for fastening an instrument installed in recessed arrangement in an instrument panel (18), in which the instrument, when being installed, is guided on the front side through an opening in the instrument panel (18) and is fixed, by a front flange (19) of its housing (17), on the instrument panel (18), the housing (17) exhibiting at least one groove (16) extended essentially in the direction of installation (2) of the instrument and at least two clamping elements (10, 1; 20, 21) being provided, of which a first (10; 20) is inserted in the groove (16) and a second (1; 21) is mounted rotatably in the first clamping element (10; 20) such that, upon its rotation, the first clamping element (10; 20) becomes jammed in the groove (16) and fixes the front flange (19) on the instrument panel (18), characterized in that the first clamping element (10, 20) is guided in a continuously displaceable manner in the groove (16) and in that, in order to fasten the instrument, the first clamping element (10; 20) can firstly be displaced into a desired position in the groove (16), can then be jammed in the groove (16) by a first twisting of the second clamping element (1; 21) and finally, by further twisting of the second clamping element (1; 21), the fixing of the front flange (19) on the instrument panel is realized.

2. Device according to Claim 1, characterized in that, as a first clamping element, a U-shaped expanding spring (10, 20) is provided, having legs which expand whenever the second clamping element is twisted.

3. Device according to Claim 2, characterized in that the expanding spring (10) supports a connecting link (11) into which the second clamping element, configured as a lever (1), can be inserted by a bent-out portion (3) acting as rotational axis (7) for the lever (1).

4. Device according to Claims [sic] 3, characterized in that the lever (1) exhibits an outer edge (6) which can be supported on that side of the instrument panel (18) facing away from the front flange (19) and has an essentially helically widening contour.

5. Device according to Claim 4, characterized in that the essentially helically widening contour of the outer edge (6) of the lever (1) is essentially formed by two circular segments (A, B), the circular centres of which are disposed mutually offset, and of which one of the circular centres is disposed on the centre of the bent-out portion (3), which centre forms the rotational axis (7) of the lever (1).

6. Device according to one of Claims 3 to 5, characterized in that the connecting link (11) contains at least three angular segments (12, 13, 14) disposed centrically symmetrical to the rotational axis (7) of the lever (1), which angular segments are configured such that the first clamping element, after the lever (1) has been inserted into the first of the three angular segments (12) of the connecting link (11), exerts no clamping force and, when the lever (1) is twisted into the second of the three angular segments (13), is clamped tightly in the groove (16), and into the third of the three angular segments (14), fixes the rotational axis (7) of the lever (1), as the clamping force is maintained.

7. Device according to one of Claims 3 to 6, characterized in that the expanding spring (10) supports on the mutually facing faces of the legs of the U, in the region of its open end, the connecting link (11), and in that the bent-out portion (3) of the lever (1) has an essentially T-shape, the neck (4) of the T being guided in the connecting link (11) and the arms (5) of the T engaging behind the two legs of the expanding spring (10).

8. Device according to Claim 7, characterized in that the expanding spring (10) is of bowed configuration.

9. Device according to one of Claims 3 - 8, characterized in that the lever exhibits a barb (8) which is lockable on the housing (17) of the instrument.

10. Device according to Claim 2, characterized in that the expanding spring (20) supports an internal thread (25) in which an external thread (26) of a screw (21) provided as a second clamping element is rotatably guided.

11. Device according to Claim 10, characterized in that the screw (21) exhibits, in coaxial arrangement, the external thread (26), a cone (29) which is tapered in the direction of the external thread (26) and a segment (30) which adjoins the cone (29) on its widened-out side and is cylindrically configured, and in that the screw, at the end facing away from the cylindrically configured segment (31), can be guided through the internal thread (25) of the expanding spring (20).

12. Device according to one of Claims 10 or 11, characterized in that the expanding spring (20) exhibits, in the arc of the U, at least one first protrusion (22), which is extended essentially perpendicular to the positional plane of the U and serves to receive the internal thread (25), and at least two second protrusions (32, 33), which are extended in opposite directions to each other in the positional plane of the U and serve to guide the expanding spring (20) in the groove (16) and, at the free ends of the legs of the U, and at least one third shoulder [sic] (23, 24) respectively, which is extended essentially perpendicular to the positional plane of the U and serves to support the cone (29), and at least two fourth shoulders [sic] (34, 35), which are extended in the positional plane of the U and serve to guide and fix the expanding spring (20) in the groove (16).

## Revendications

1. Dispositif de fixation d'un instrument encastré dans un tableau d'instruments (18), dans lequel l'instrument est amené lors de l'insertion par l'avant par une ouverture du tableau d'instruments (18), et est immobilisé avec une bride avant (19) de son boîtier (17) sur le tableau d'instruments (18), le boîtier (17) présentant au moins une rainure (16) s'étendant essentiellement dans le sens d'insertion (2) de l'instrument, et au moins deux éléments de serrage (10, 1; 20, 21) étant prévus, dont un premier (10, 20) est inséré dans la rainure (16) est un deuxième (1; 21) est placé à rotation dans le premier élément de serrage (10; 20) de telle sorte qu'à sa rotation, le premier élément (10; 20) se bloque dans la rainure (16) et immobilise la bride avant (19) sur le tableau d'instruments (18), caractérisé en ce que le premier élément de serrage (10, 20) est amené avec possibilité de déplacement continu dans la rainure (16), et en ce que pour la fixation de l'instrument, tout d'abord le premier élément de serrage (10; 20) est placé de manière à pouvoir se déplacer dans une position souhaitée dans la rainure (16), puis peut être serré par une première rotation du deuxième élément de serrage (1; 21) dans la rainure (16), et finalement l'immobilisation de la bride avant (19) au tableau d'instruments se produit par une rotation supplémentaire du deuxième élément de serrage (1; 21).

2. Dispositif selon la revendication 1, caractérisé en ce qu'un ressort écarteur (10, 20) conçu en forme de U est prévu en tant que premier élément de serrage, avec des branches s'écartant lors de la rotation du deuxième élément de serrage.

3. Dispositif selon la revendication 2, caractérisé en ce que le ressort écarteur (10) porte une coulisse (11), dans laquelle le deuxième élément de serrage conçu en tant que levier (1) peut être introduit, avec un coude (3) agissant comme un axe de rotation (7) du levier (1).

4. Dispositif selon la revendication 3, caractérisé en ce que le levier (1) présente un bord externe (6) pouvant s'appuyer sur la face du tableau d'instruments (18) opposée à la bride avant (19), avec un contour s'élargissant essentiellement en forme de spirale.

5. Dispositif selon la revendication 4, caractérisé en ce que le contour s'élargissant essentiellement en forme de spirale du bord externe (6) du levier (1) est essentiellement formé de deux sections circulaires (A, B) dont les centres sont disposés décalés l'un par rapport à l'autre, et dont l'un des centres est disposé sur le centre du coude (3) formant l'axe de rotation (7) du levier (1).

6. Dispositif selon l'une quelconque des revendications 3 à 5, caractérisé en ce que la coulisse (11) contient au moins trois sections angulaires (12, 13, 14) disposées symétriquement suivant une symétrie centrale par rapport à l'axe de rotation (7) du levier (1), lesquelles sont conçues de telle sorte, qu'après l'insertion du levier (1) dans la première des trois sections angulaires (12) de la coulisse (11), le premier élément de serrage n'exerce aucune force de serrage et est bloqué, par la rotation du levier (1) dans la deuxième des trois sections angulaires (13) dans la rainure (16), et fixe l'axe de rotation (7) du levier (1) dans la troisième des trois sections angulaires (14) sans modification de la force de serrage.

7. Dispositif selon l'une quelconque des revendications 3 à 6, caractérisé en ce que le ressort écarteur (10) porte la coulisse (11) sur les faces en regard des branches du U dans le domaine de son extrémité ouverte, et en ce que le coude (3) du levier (1) est essentiellement en forme de T, le col (4) du T étant amené dans la coulisse (11), et les bras (5) du T s'engageant par l'arrière avec les deux branches du ressort écarteur (10).

8. Dispositif selon la revendication 7, caractérisé en ce que le ressort écarteur (10) est conçu en forme bombée.

9. Dispositif selon l'une quelconque des revendications 3 - 8, caractérisé en ce que le levier présente une barbe (8) pouvant être accrochée au boîtier (17) de l'instrument.

10. Dispositif selon la revendication 2, caractérisé en ce que le ressort écarteur (20) porte un taraudage (25), dans lequel un filetage (26) d'une vis (21) prévue en tant que second élément de serrage est amenée avec possibilité de tourner.

11. Dispositif selon la revendication 10, caractérisé en ce que la vis (21) présente, dans une disposition coaxiale, le filetage (26), un cône (29) se rétrécissant en direction du filetage (26), et une section (30) conçue en forme cylindrique se raccordant au cône (29) à sa face la plus large, et en ce que la vis peut être amenée à l'extrémité opposée à la section (30) conçue en forme cylindrique par le taraudage (25) du ressort écarteur (20).

12. Dispositif selon l'une quelconque des revendications 10 ou 11, caractérisé en ce que le ressort écarteur (20) présente, dans la courbe du U, au moins un premier bout (22) s'étendant essentiellement perpendiculairement au plan support du U et servant à recevoir le taraudage (25) ainsi qu'au moins deux seconds bouts (32, 33) concourants s'étendant dans le plan support du U et servant au guidage du ressort écarteur (20) dans la rainure (16), et à chaque extrémité libre des branches du U, respectivement au moins un troisième bout (23, 24) s'étendant essentiellement perpendiculairement au plan support du U et servant au support du cône (29) ainsi qu'au moins deux quatrièmes bouts (34 ,35) s'étendant dans le plan support du U et servant au guidage et à l'immobilisation du ressort écarteur (20) dans la rainure (16).
